# EUROPEAN PATENT APPLICATION

(11) **EP 4 737 993 A1**
(43) Date of publication of application: **06.05.2026**
(21) Application number: 24832067.3
(22) Date of filing: 27.06.2024
(51) Int. Cl.: G02F 1/13, B60J 1/00, E06B 9/24, G02F 1/1333, G02F 1/1339

(54) **LIGHT CONTROL MEMBER AND LAMINATED PLATE**

(30) Priority: 28.06.2023 JP 2023106484
(71) Applicant: Dai Nippon Printing Co., Ltd., Tokyo 162-8001 (JP)
(72) Inventor: IKEZAWA, Takao, Tokyo 162-8001 (JP); TAMAKI, Atsushi, Tokyo 162-8001 (JP); SHIRAISHI, Isamu, Tokyo 162-8001 (JP)
(74) Representative: Müller-Boré & Partner Patentanwälte PartG mbB
(86) International application number: PCT/JP2024/023443
(87) International publication number: WO 2025/005209

(57) **Abstract**

A light modulating member (20) is capable of adjusting visible light transmittance. The light modulating member (20) includes a first laminated body (30), a second laminated body (40), a liquid crystal layer (21), a seal member (25), and a wall portion (27). The first laminated body (30) includes a first electrode (33) and a first base member (31) that supports the first electrode 33). The second laminated body (40) includes a second electrode (43) separated from the first electrode (33) and a second base member (41) that supports the second electrode (43). The liquid crystal layer (21) is located between the first laminated body (30) and the second laminated body (40). The seal member (25) surrounds the liquid crystal layer (21). The wall portion (27) divides the liquid crystal layer (21) into a plurality of sections (A) in plan view of the light modulating member (20). An area of the sections (A) is equal to or less than 2500 mm².

## Description

### Technical Field

The present disclosure relates to a light modulating member and a laminated plate including the light modulating member.

### Background Art

A light modulating member that can regulate visible light transmittance, such as the one disclosed in Patent Literature 1, is known. The light modulating member disclosed in Patent Literature 1 includes, for example, a liquid crystal layer containing liquid crystals. The light modulating member including a liquid crystal layer can change visible light transmittance upon application of a voltage. The light modulating member including a liquid crystal layer is advantageous in that the change in the visible light transmittance is fast. The light modulating member is, for example, used for a transparent part of a partition member such as a window.

### Citation List

### Patent Literature

PTL 1: Japanese Unexamined Patent Application Publication No. 2006-350111

### Summary of Invention

### Technical Problem

In a conventional liquid crystal layer, liquid crystal molecules are sometimes unevenly distributed. For example, in a case where a light modulating member including a liquid crystal layer is processed under high temperature and high pressure, expansion of the light modulating member caused by heat and deformation of the light modulating member caused by pressure may cause liquid crystal molecules to move and be unevenly distributed in the liquid crystal layer. For example, in a case where a light modulating member including a liquid crystal layer is placed obliquely with respect to a horizontal direction, liquid crystal molecules may move and be unevenly distributed in the liquid crystal layer due to gravity. The unevenly distributed liquid crystal molecules are visibly noticeable from an outside of the light modulating member. This may degrade outer appearance of the light modulating member.

An object of the present disclosure is to suppress uneven distribution of liquid crystal molecules in a liquid crystal layer.

### Solution to Problem

An embodiment of the present disclosure relates to the following [1] to [12].
[1] A light modulating member that is capable of adjusting visible light transmittance, the light modulating member including: a first laminated body including a first electrode and a first base member that supports the first electrode; a second laminated body including a second electrode separated from the first electrode and a second base member that supports the second electrode; a liquid crystal layer located between the first laminated body and the second laminated body; a seal member that surrounds the liquid crystal layer; and a wall portion that divides the liquid crystal layer into a plurality of sections in plan view of the light modulating member, in which an area of a largest section among the sections is equal to or less than 2500 mm².
[2] A light modulating member that is capable of adjusting visible light transmittance and is placed so as to extend at least in a vertical direction, the light modulating member including: a first laminated body including a first electrode and a first base member that supports the first electrode; a second laminated body including a second electrode separated from the first electrode and a second base member that supports the second electrode; a liquid crystal layer located between the first laminated body and the second laminated body; a seal member that surrounds the liquid crystal layer; and a wall portion that divides the liquid crystal layer into a plurality of sections in plan view of the light modulating member, in which a value obtained by dividing an area [mm²] of a largest section among the sections by a longest length [mm] among lengths of the largest section in a horizontal direction is equal to or less than 50.
[3] The light modulating member according to [2], in which the area of the largest section among the sections is equal to or less than 2500 mm².
[4] The light modulating member according to [1] or [3], in which the area of the largest section among the sections is equal to or more than 13 mm².
[5] The light modulating member according to any one of [1] to [4], in which a width of the wall portion is equal to or more than 10 µm and equal to or less than 1000 µm.
[6] The light modulating member according to any one of [1] to [5], in which a length of projection of a segment connecting centroids of two sections divided by a same wall portion in a direction orthogonal to a direction in which the wall portion extends is equal to or more than 1 mm and equal to or less than 50 mm.
[7] The light modulating member according to any one of [1] to [6], in which a value obtained by dividing the area [mm²] of the largest section among the sections by an average of widths [µm] of the wall portions that define the largest section is equal to or less than 250.
[8] The light modulating member according to any one of [1] to [7], further including a support portion provided in each of the sections.
[9] A substrate with a light modulating member, including: a first substrate; and the light modulating member according to any one of [1] to [8] supported on the first substrate.
[10] A laminated plate including: a first substrate and a second substrate that are opposed to each other; and the light modulating member according to any one of [1] to [8] located between the first substrate and the second substrate.
[11] The laminated plate according to [10], in which at least one of the first substrate and the second substrate is curved.
[12] The laminated plate according to [10], in which the first substrate and the second substrate have a flat plate shape.

According to the present disclosure, uneven distribution of liquid crystal molecules in a liquid crystal layer can be suppressed.

### Brief Description of Drawings

[Fig. 1] Fig. 1 is a perspective view of a mobile body including a light modulating member.
[Fig. 2] Fig. 2 is a plan view illustrating a state where visible light transmittance of the light modulating member has been adjusted to a high level.
[Fig. 3] Fig. 3 is a plan view illustrating a state where the visible light transmittance of the light modulating member has been adjusted to a low level.
[Fig. 4] Fig. 4 is a cross-sectional view of the light modulating member taken along line IV-IV of Fig. 2.
[Fig. 5] Fig. 5 is an enlarged plan view of a part of the light modulating member.
[Fig. 6] Fig. 6 is a plan view of a modification of the light modulating member.
[Fig. 7] Fig. 7 is a plan view of a modification of the light modulating member.
[Fig. 8] Fig. 8 is a plan view of a modification of the light modulating member.
[Fig. 9] Fig. 9 is a plan view of a modification of the light modulating member.
[Fig. 10] Fig. 10 is a plan view of a modification of the light modulating member.
[Fig. 11] Fig. 11 is a plan view of a modification of the light modulating member.
[Fig. 12] Fig. 12 is a plan view of a modification of the light modulating member.
[Fig. 13] Fig. 13 is a plan view of a modification of the light modulating member.
[Fig. 14] Fig. 14 is a plan view of a modification of the light modulating member.
[Fig. 15] Fig. 15 is a plan view of a modification of the light modulating member.
[Fig. 16] Fig. 16 is a plan view of a modification of the light modulating member.
[Fig. 17] Fig. 17 is a plan view of a modification of the light modulating member.
[Fig. 18] Fig. 18 is a plan view of a modification of the light modulating member.
[Fig. 19] Fig. 19 is a plan view of a modification of the light modulating member.
[Fig. 20] Fig. 20 is a plan view of a modification of the light modulating member.
[Fig. 21] Fig. 21 is a plan view of a modification of the light modulating member.
[Fig. 22] Fig. 22 is a plan view of a modification of the light modulating member.
[Fig. 23] Fig. 23 is a diagram for explaining an example of a method for manufacturing the light modulating member.
[Fig. 24] Fig. 24 is a diagram for explaining an example of a method for manufacturing the light modulating member.
[Fig. 25] Fig. 25 is a diagram for explaining an example of a method for manufacturing the light modulating member.
[Fig. 26] Fig. 26 is a diagram for explaining an example of a method for manufacturing the light modulating member.
[Fig. 27] Fig. 27 is a cross-sectional view of a substrate with a light modulating member including a light modulating member.
[Fig. 28] Fig. 28 is a plan view of a modification of the light modulating member.
[Fig. 29] Fig. 29 is a cross-sectional view taken along line XXIX-XXIX of Fig. 28.

### Description of Embodiments

An embodiment of the present disclosure is described below with reference to the drawings. In the drawings attached to the present specification, scales, dimensional ratios, and the like are changed and exaggerated from actual ones as appropriate for ease of illustration and understanding. Constituent elements and the like illustrated in one drawing may be omitted in another drawing.

In the present specification, terms that specify shapes, geometric conditions, and degrees of the shapes and geometric conditions, such as "parallel", "orthogonal", and "identical", and numerical values such as lengths and angles, are not to be interpreted strictly, but are to be construed to include ranges that allow for similar functions.

In the present specification, a direction normal to a plate-shaped member is a direction normal to a plate surface of the target plate-shaped member. The term "plate surface" refers to a surface that coincides with a target plate-shaped member when the target plate-shaped member is viewed in its entirety and macroscopically. The same applies when "film", "sheet", or the like is used instead of "plate".

In the present specification, in a case where a plurality of candidates are given for an upper limit and a lower limit of a parameter, the parameter may be a numerical range combining any one of the candidates for the upper limit and any one of the candidates for the lower limit.

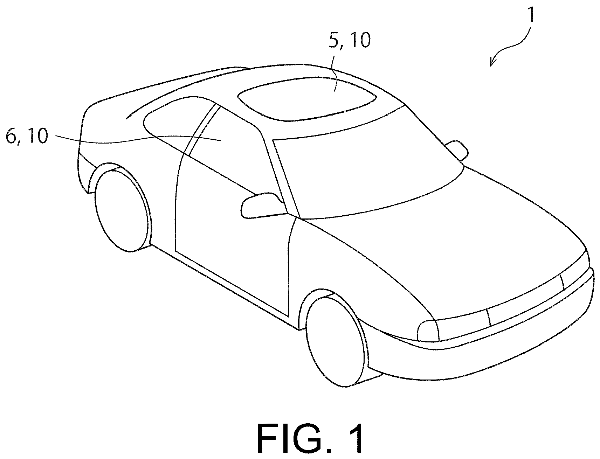

Fig. 1 is a perspective view of a mobile body 1 including a laminated plate 10 according to the embodiment. The laminated plate 10 can be, for example, applied to a member that partitions a space. The laminated plate 10 is used as a window or a windshield device of a mobile body such as an automobile, a train, a ship, or an airplane, a transparent part of a partition member such as a part of a window or a partition of an exterior wall, an interior wall, a door, or the like of a building, or a sun visor provided in a mobile body such as an automobile. In the example illustrated in Fig. 1, the laminated plate 10 is used as a sunroof 5 and a side window 6 of an automobile. The laminated plate 10 may have any shape corresponding to a member to which the laminated plate 10 is applied. The laminated plate 10 includes a light modulating member 20 that can adjust visible light transmittance. The sunroof 5 and the side window 6 reduce solar light or the like entering the automobile and provide good visibility for occupants of the automobile. The laminated plate 10 is not limited to the example illustrated in Fig. 1, and may be used as a sun visor, a rear window, a side mirror, or the like of the mobile body 1. The mobile body 1 is not limited to the example illustrated in Fig. 1, and may be a ship, a railroad vehicle, an airplane, or the like.

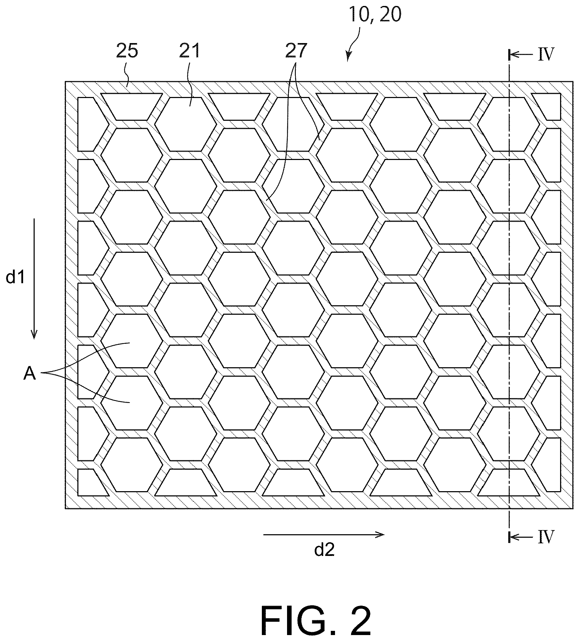

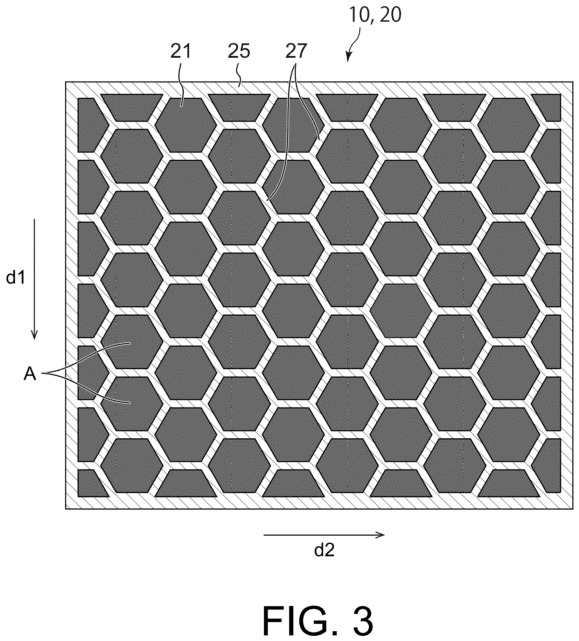

Fig. 2 is a plan view of the laminated plate 10 and the light modulating member 20 in a state where the visible light transmittance has been adjusted to a high level. Fig. 3 is a plan view of the laminated plate 10 and the light modulating member 20 in a state where visible light transmittance has been adjusted to a low level. The plan views of the laminated plate 10 and the light modulating member 20 are views illustrating the laminated plate 10 and the light modulating member 20 observed from a direction normal to a plate surface thereof. In the plan views, the laminated plate 10 and the light modulating member 20 extend in a first direction d1 and a second direction d2. The first direction d1 and the second direction d2 are not parallel to each other and may be orthogonal to each other. In a case where the laminated plate 10 is used as the side window 6 or the like, the laminated plate 10 is placed so that the second direction d2 matches a horizontal direction. The first direction d1 may be inclined with respect to a vertical direction but contains a component in the vertical direction. In this case, the light modulating member 20 extends at least in the vertical direction. In a case where the laminated plate 10 is used as the sunroof 5 or the like, both of the first direction d1 and the second direction d2 may be a horizontal direction.

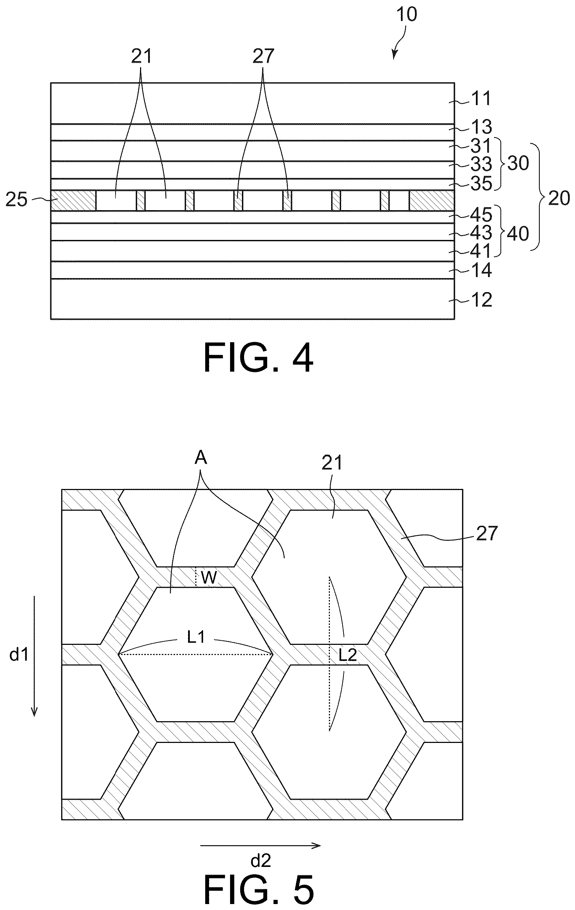

Fig. 4 is a cross-sectional view of the laminated plate 10 and the light modulating member 20 taken along line IV-IV of Fig. 2. As illustrated in Fig. 4, the laminated plate 10 includes a first substrate 11 and a second substrate 12, a first joining layer 13 and a second joining layer 14, and the light modulating member 20. The first substrate 11 and the second substrate 12 are opposed to each other. A plate surface of the first substrate 11 faces a plate surface of the second substrate 12. The light modulating member 20 is located between the first substrate 11 and the second substrate 12. The first joining layer 13 is located between the first substrate 11 and the light modulating member 20. The second joining layer 14 is located between the second substrate 12 and the light modulating member 20.

The first substrate 11 and the second substrate 12 preferably have high visible light transmittance so that the visible light transmittance of the laminated plate 10 can be made high in a case where the visible light transmittance of the light modulating member 20 is adjusted to a high level. The visible light transmittance of the first substrate 11 and the second substrate 12 may be equal to or more than 20%, may be equal to or more than 30%, may be equal to or more than 40%, may be equal to or more than 45%, may be equal to or more than 80%, or may be equal to or more than 85%. The first substrate 11 and the second substrate 12 have a flat plate shape. A material of the first substrate 11 and the second substrate 12 may be, for example, soda-lime glass. A thickness of the first substrate 11 and a thickness of the second substrate 12 may be equal to or more than 1 mm, may be equal to or more than 2 mm, may be equal to or more than 3 mm, may be equal to or more than 3.5 mm, may be equal to or less than 10 mm, may be equal to or less than 8 mm, or may be equal to or less than 5 mm. The first substrate 11 and the second substrate 12 having such a thickness are good in strength and optical characteristics. The first substrate 11 and the second substrate 12 may be made of an identical material and may have an identical configuration or may be different from each other in at least one of the material and configuration. For example, the first substrate 11 and the second substrate 12 may be different from each other in thickness or visible light transmittance.

In the present specification, the visible light transmittance is specified as an average value of total light transmittance at each wavelength, measured at 1 nm intervals within a wavelength range from 380 nm to 780 nm by using a spectrophotometer ("UV-3600i Plus" produced by Shimadzu Corporation, which is a product compliant with JIS K0115). An incident angle during measurement of the visible light transmittance is set to 0° in a case where no specific transmission direction is defined. The incident angle is an angle of a traveling direction of incident light with respect to a direction normal to an incident surface and is a value less than 90°.

The first joining layer 13 joins the first substrate 11 and the light modulating member 20 to each other. The second joining layer 14 joins the second substrate 12 and the light modulating member 20 to each other. The first joining layer 13 and the second joining layer 14 may have high visible light transmittance so that the visible light transmittance of the laminated plate 10 can be made high in a case where the visible light transmittance of the light modulating member 20 is adjusted to a high level. The visible light transmittance of the first joining layer 13 and the second joining layer 14 may be equal to or more than 90%. A material of the first joining layer 13 and the second joining layer 14 may be any of various adhesive or tacky materials. For example, the material of the first joining layer 13 and the second joining layer 14 may be polyvinyl butyral, may be an ethylene-vinyl acetate copolymer, may be a cycloolefin polymer, may be an ionomer, may be Optically Clear Adhesive (OCA), may be Optically Clear Resin (OCR), may be a combination of OCA and OCR, or may be a combination of polyvinyl butyral and OCR. A thickness of the first joining layer 13 and a thickness of the second joining layer 14 may be equal to or more than 0.05 mm, may be equal to or more than 0.15 mm, or may be equal to or less than 1 mm. The first joining layer 13 and the second joining layer 14 may be made of an identical material and may have an identical configuration or may be different from each other in at least one of the material and configuration. For example, the first joining layer 13 and the second joining layer 14 may be different from each other in thickness or visible light transmittance.

The visible light transmittance of the light modulating member 20 is adjustable. The visible light transmittance which the light modulating member 20 can take may be equal to or more than 0.5%, may be equal to or more than 1%, may be equal to or more than 10%, may be equal to or more than 20%, may be equal to or less than 75%, may be equal to or less than 70%, may be equal to or less than 45%, or may be equal to or less than 40%. The light modulating member 20 is a plate-shaped member. A thickness of the light modulating member 20 may be equal to or more than 0.1 mm or may be equal to or less than 0.5 mm.

As illustrated in Figs. 2 to 4, the light modulating member 20 includes a first laminated body 30, a second laminated body 40, a liquid crystal layer 21, a seal member 25, and a wall portion 27. The liquid crystal layer 21 is located between the first laminated body 30 and the second laminated body 40. The seal member 25 surrounds the liquid crystal layer 21. The light modulating member 20 may include another functional layer (not illustrated) that is intended to achieve a specific function.

The first laminated body 30 includes a first electrode 33, a first base member 31 that supports the first electrode 33, and a first alignment film 35. The first electrode 33 extends along the first base member 31. The first electrode 33 is provided so as to face the liquid crystal layer 21.

The second laminated body 40 includes a second electrode 43, a second base member 41 that supports the second electrode 43, and a second alignment film 45. The second electrode 43 extends along the second base member 41. The second electrode 43 is provided so as to face the liquid crystal layer 21.

The first base member 31 and the second base member 41 appropriately support the first electrode 33 and the second electrode 43, respectively. The first base member 31 and the second base member 41 have a thin plate shape. The first base member 31 and the second base member 41 are transparent. A thickness of the first base member 31 and the second base member 41 may be equal to or more than 30 µm and equal to or less than 250 µm. The first base member 31 and the second base member 41 having such a thickness are good in strength and optical characteristics. A material of the first base member 31 and the second base member 41 is, for example, glass, polyethylene terephthalate, triacetyl cellulose, polyethylene naphthalate, polycarbonate, or cycloolefin polymer.

The term "transparent" means that the visible light transmittance is equal to or more than 40%, equal to or more than 70%, or equal to or more than 80%.

The first electrode 33 and the second electrode 43 are separate from each other. The first electrode 33 and the second electrode 43 are not electrically directly connected. A voltage is applied to the first electrode 33 and the second electrode 43 through a wire (not illustrated). By changing the voltage applied to the first electrode 33 and the second electrode 43, the visible light transmittance of the light modulating member 20 can be adjusted. The first electrode 33 and the second electrode 43 are transparent. The first electrode 33 and the second electrode 43 are, for example, a transparent conductive film made of indium tin oxide (ITO), a mesh made of copper, a carbon nanotube, or a silver nanowire.

The first alignment film 35 and the second alignment film 45 regulate orientation of liquid crystal molecules in the liquid crystal layer 21. For example, the first alignment film 35 and the second alignment film 45 may be produced by performing a rubbing process on a resin layer such as polyimide, may be produced by irradiating a polymer film with linearly polarized ultraviolet light to selectively react polymer chains along a polarization direction based on a photoalignment method, or may be produced by molding a fine linear concavo-convex pattern produced through a rubbing process.

The liquid crystal layer 21 contains a plurality of liquid crystal molecules. By applying a voltage to the first electrode 33 and the second electrode 43, an electric field is formed in the liquid crystal layer 21. The orientation of the liquid crystal molecules is changed by the electric field. The orientation of the liquid crystal molecules may be changed by changing the electric field formed in the liquid crystal layer 21, in other words, by changing the voltage applied to the first electrode 33 and the second electrode 43. The visible light transmittance of the liquid crystal layer 21 can change depending on the orientation of the liquid crystal molecules. A driving method of the liquid crystal molecules is not particularly limited, and may be, for example, a Vertical Alignment (VA) method, a Twisted Nematic (TN) method, an In Plane Switching (IPS) method, a Guest Host (GH) method, or a modified version of any of these methods. The liquid crystal layer 21 preferably contains no polymerizable compound.

The light modulating member 20 may further include two polarization plates provided so that the liquid crystal layer 21 is interposed therebetween depending on the driving method employed for the liquid crystal molecules of the liquid crystal layer 21. The first alignment film 35 and the second alignment film 45 may be omitted depending on the driving method employed for the liquid crystal molecules of the liquid crystal layer 21.

A case where the driving method of the liquid crystal molecules of the liquid crystal layer 21 is the GH method is described below as an example. According to the GH method, the liquid crystal layer 21 further contains a dichroic dye composition. According to the GH method, the orientation of the liquid crystal molecules and dichroic dye composition is regulated to horizontal orientation by the first alignment film 35 and the second alignment film 45 in a state where no voltage is applied to the first electrode 33 and the second electrode 43. As a result, the visible light transmittance of the liquid crystal layer 21 is low. The liquid crystal molecules and the dichroic dye composition approach orientation perpendicular to the first alignment film 35 and the second alignment film 45 due to an electric field in a state where a voltage is applied between the first electrode 33 and the second electrode 43. As a result, the visible light transmittance of the liquid crystal layer 21 is high. By changing the orientation of the liquid crystal molecules and the dichroic dye composition, the visible light transmittance of the liquid crystal layer 21 can be changed, as illustrated in Figs. 2 and 3. Such a liquid crystal layer 21 is called "normally dark".

The orientation of the liquid crystal molecules and the dichroic dye composition may be regulated to vertical orientation by the first alignment film 35 and the second alignment film 45 in a state where no voltage is applied to the first electrode 33 and the second electrode 43, and the orientation of the liquid crystal molecules and the dichroic dye composition may approach horizontal orientation with respect to the first alignment film 35 and the second alignment film 45 due to an electric field in a state where a voltage is applied between the first electrode 33 and the second electrode 43. That is, the visible light transmittance of the liquid crystal layer 21 may be high in the state where no voltage is applied to the first electrode 33 and the second electrode 43, and the visible light transmittance of the liquid crystal layer 21 may be low in the state where a voltage is applied between the first electrode 33 and the second electrode 43. Such a liquid crystal layer 21 is called "normally clear".

The liquid crystal layer 21 has a low haze value in the state where the visible light transmittance is low. The haze value of the light modulating member 20 including the liquid crystal layer 21 may be equal to or less than 30% or may be equal to or less than 15% in the state where the visible light transmittance is low.

The haze value is defined as a ratio of diffuse transmittance to total light transmittance of a target object, and represents a diffusion rate of light passing through the target object. The total light transmittance is a ratio of an amount of light transmitted through the target object to an amount of light incident on the target object. The diffuse transmittance is a ratio of the amount of light transmitted through the target object in directions other than a straight direction, that is, the amount of light that is transmitted in a scattered manner to the amount of light incident on the target object. The total light transmittance and the diffuse transmittance are measured by a haze meter compliant with JIS K7361 (e.g., NDH-7000 produced by NIPPON DENSHOKU INDUSTRIES CO., LTD.).

The thickness of the liquid crystal layer 21 may be equal to or more than 1 µm or may be equal to or less than 20 µm.

The liquid crystal layer 21 may further include a spacer (not illustrated). The spacer suppresses a reduction in the thickness of the liquid crystal layer 21 caused by external pressure or the like. The spacer may have a spherical shape, may have a cylindrical shape, may have an elliptical cylindrical shape, or may have a polygonal shape. In a case where the spacer has a spherical shape, a diameter of the spacer corresponds to the thickness of the liquid crystal layer 21, and in a case where the spacer has a cylindrical shape, a length of the spacer that is a height of the spacer corresponds to the thickness of the liquid crystal layer 21. The length of the spacer may be equal to or more than 1 µm, may be equal to or more than 3 µm, may be equal to or less than 20 µm, or may be equal to or less than 15 µm. A material of the spacer may be, for example, silica.

The seal member 25 extends so as to surround the liquid crystal layer 21. The seal member 25 prevents leakage of the liquid crystal layer 21 and is bonded to the first laminated body 30 and the second laminated body 40 to fix the first laminated body 30 and the second laminated body 40 to each other. A width of the seal member 25 may be equal to or more than 100 µm or may be equal to or less than 5 mm. For example, a material of the seal member 25 may be a thermosetting resin such as epoxy resin, phenolic resin, polyurethane, or melamine resin, may be an ultraviolet curable resin such as acrylic resin, urethane acrylate, epoxy acrylate, acrylate, polyester acrylate, amide-imide resin, polysiloxane, or vinyl ester resin, or may be a thermally and ultraviolet curable epoxy-acrylic resin.

The width of the seal member 25 means a length at each position of the seal member 25, in a direction orthogonal to a direction in which the seal member 25 extends.

The wall portion 27 is provided in a portion surrounded by the seal member 25. The wall portion 27 divides the liquid crystal layer 21 into a plurality of sections A in plan view of the light modulating member 20. The sections A are defined by a plurality of wall portions 27, or by the wall portions 27 and the seal member 25. The wall portion 27 extends so as to define the sections A. In the example illustrated in Figs. 2 and 3, each of the sections A having a regular hexagonal shape is defined by six wall portions 27. The wall portions 27 are regularly arranged in a plurality of directions inclined with respect to the first direction d1 and the first direction d1. The plurality of sections A are regularly arranged two-dimensionally in plan view of the light modulating member 20. The wall portions 27 suppress movement of liquid crystal molecules contained in the liquid crystal layer 21 from one section A to another section A and are bonded to the first laminated body 30 and the second laminated body 40 to fix the first laminated body 30 and the second laminated body 40 to each other. Fig. 5 is an enlarged plan view of a part of the light modulating member 20 illustrated in Fig. 2. A width W of the wall portions 27 illustrated in Fig. 5 may be equal to or more than 10 µm, may be equal to or more than 30 µm, may be equal to or more than 50 µm, may be equal to or less than 1000 µm, may be equal to or less than 500 µm, or may be equal to or less than 400 µm. A color of the wall portions 27 may be transparent or a color with high light transmittance or may be a color (e.g., black) in a state where the visible light transmittance has been lowered by the light modulating member 20. A material of the wall portion 27 may be, for example, a thermosetting epoxy resin or an ultraviolet curable acrylic resin. The wall portions 27 may be integral with the seal member 25 or may be provided separately from the seal member 25.

The width W of each of the wall portions 27 means a length at each position of the wall portion 27 in a direction orthogonal to a direction in which the wall portion 27 extends.

An area of a largest section among the sections A may be equal to or more than 13 mm², may be equal to or more than 85 mm², may be equal to or less than 2500 mm², may be equal to or less than 1500 mm², or may be equal to or less than 400 mm². A value obtained by dividing the area [mm²] of the largest section among the sections A by a longest length L1 [mm] among lengths of the largest section A in the horizontal direction may be equal to or less than 50, may be equal to or less than 30, may be equal to or less than 15, or may be equal to or less than 7.5. A value obtained by dividing the area [mm²] of the largest section among the sections A by an average of the widths [µm] of the wall portions 27 that define the largest section A may be equal to or less than 250, may be equal to or less than 150, may be equal to or less than 100, may be equal to or less than 50, may be equal to or less than 12, may be equal to or less than 6, may be equal to or less than 3, or may be equal to or more than 0.05. A length L2 of projection of a segment connecting centroids of two sections A divided by the same wall portion 27 in a direction orthogonal to a direction in which the wall portion 27 extends may be equal to or more than 1 mm, may be equal to or more than 10 mm, may be equal to or more than 20 mm, may be equal to or less than 50 mm, or may be equal to or less than 30 mm.

The shape, area, and length in a specific direction of each of the sections A, the width and extending direction of each of the wall portions 27, and the like can be adjusted by appropriately setting a pattern of printing of a wall portion material 27A that will form the wall portion 27 in a method for manufacturing the light modulating member 20, which will be described later.

The width of the seal member 25, the width W of the wall portion 27, the area of the largest section among the sections A, the value obtained by dividing the area of the largest section among the sections A by the longest length L1 of the largest section A in the horizontal direction, the value obtained by dividing the area of the largest section among the sections A by an average of the widths W of the wall portions 27 that define the section A, and the length L2 of projection of a segment connecting centroids of two sections A divided by the same wall portion 27 in a direction orthogonal to a direction in which the wall portion 27 extends can be calculated by acquiring an image of the laminated plate 10 and the light modulating member 20 in plan view and processing the image. A specific calculation method is described below. A 5 cm square measurement range is specified at a center of the laminated plate 10 and the light modulating member 20. In a case where a 5 cm square measurement range cannot be specified, the whole laminated plate 10 and the whole light modulating member 20 are set as a measurement range. In a case where the color of the wall portions 27 is transparent or a color with high light transmittance, the visible light transmittance of the light modulating member 20 is adjusted to a lowest level. In a case where the color of the wall portions 27 is a color (e.g., black) in the state where the visible light transmittance has been lowered by the light modulating member 20, the visible light transmittance of the light modulating member 20 is adjusted to a highest level. An image of the laminated plate 10 and the light modulating member 20 in the measurement range is acquired in a state where the laminated plate 10 and the light modulating member 20 in the measurement range are irradiated with white light. A darkest part of the acquired image is set to grayscale 255 and a lightest part of the acquired image is set to grayscale 0, and a density of the image is classified into grayscales 0 to 255. Grayscale threshold values are set so that the seal member 25, the wall portions 27, and the sections A can be distinguished. For example, the grayscales 0 to 127 may be regarded as the seal member 25 and the wall portion 27 and the grayscales 128 to 255 may be regarded as the sections A to distinguish the seal member 25, the wall portions 27, and the sections A. In the binarized image in which the threshold values are set, the seal member 25, the wall portions 27, and the sections A are distinguished. The measurement range includes the plurality of wall portions 27 and the plurality of sections A. The width of the seal member 25, the width W of the wall portions 27, the area of the largest section among the sections A, the longest length L1 of the section A in the horizontal direction, and the length L2 of projection of a segment connecting centroids of two sections A divided by the same wall portion 27 in a direction orthogonal to a direction in which the wall portion 27 extends are measured on the basis of the binarized image. The value obtained by dividing the area of the largest section among the sections A by the longest length L1 of the largest section A in the horizontal direction and the value obtained by dividing the area of the largest section among the sections A by the average of the widths W of the wall portions 27 that define the largest section A are calculated from the measured values. A plurality of values are measured and calculated from one measurement range regarding each of the width of the seal member 25, the width W of the wall portions 27, the area of the largest section among the sections A, the longest length L1 of the section A in the horizontal direction, the length L2 of projection of a segment connecting centroids of two sections A divided by the same wall portion 27 in a direction orthogonal to a direction in which the wall portion 27 extends, the value obtained by dividing the area of the largest section among the sections A by the longest length L1 of the largest section A in the horizontal direction, and the value obtained by dividing the area of the largest section among the sections A by an average of the widths W of the wall portions 27 that define the largest section A.

Four other 5 cm square measurement ranges are specified so as to have one side at a position away by 5 cm from a corresponding side of the square. In each measurement range, values are measured and calculated in a similar manner. In a case where other measurement ranges cannot be specified, the measurement and calculation are omitted. The values are averaged while excluding the top 25% and bottom 25% of the values in the five measurement ranges. The averages are specified as the above values. For example, in a case where 20 values are measured from the one measurement range regarding the width W of the wall portions 27 and 100 values are measured in total from the five measurement ranges regarding the width W of the wall portions 27, a value obtained by averaging remaining 50 values while excluding the top 25 values and bottom 25 values is specified as the value of the width W of the wall portions 27.

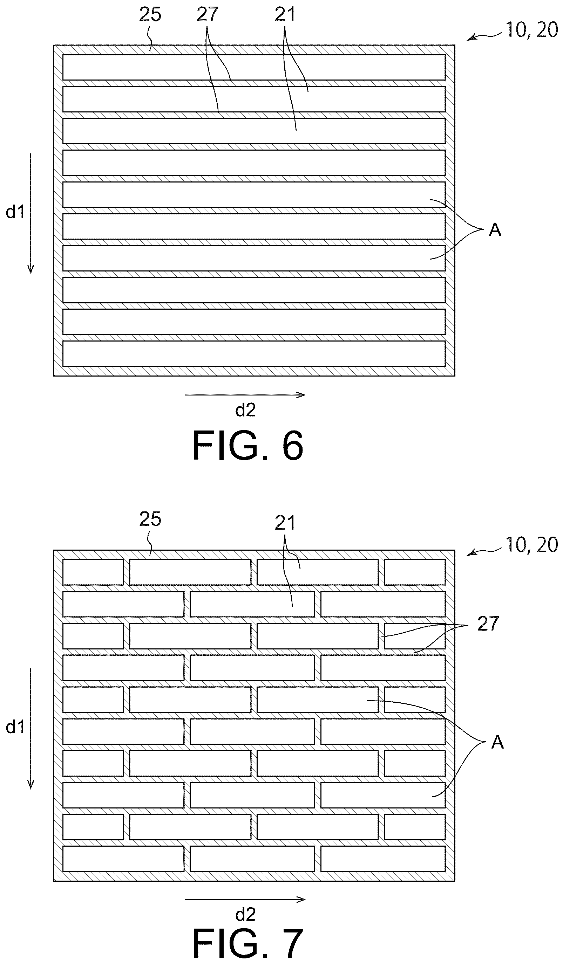

The shape of the sections A is not limited to the example illustrated in Figs. 2 and 3 and may be any shape. For example, the sections A may have the shapes illustrated in Figs. 6 to 22. In the examples illustrated in Figs. 6 to 22, a state where the visible light transmittance of the laminated plate 10 and the light modulating member 20 has been adjusted to a high level is illustrated, as in Fig. 2.

In the example illustrated in Fig. 6, each of rectangular sections A extending in the first direction d1 and the second direction d2 is defined by the seal member 25 and one or more wall portions 27. A length of each of the sections A extending in the second direction d2 is longer than a length of the section A extending in the first direction d1. The wall portions 27 are arranged in the first direction d1. The sections A are regularly arranged in the first direction d1.

In the example illustrated in Fig. 7, each of rectangular sections A extending in the first direction d1 and the second direction d2 is defined by a plurality of wall portions 27, or the seal member 25 and a plurality of wall portions 27. A length of each of the sections A extending in the second direction d2 is longer than a length of the section A extending in the first direction d1. The wall portions 27 are arranged in the first direction d1 and the second direction d2. The sections A are regularly arranged in the first direction d1 and the second direction d2.

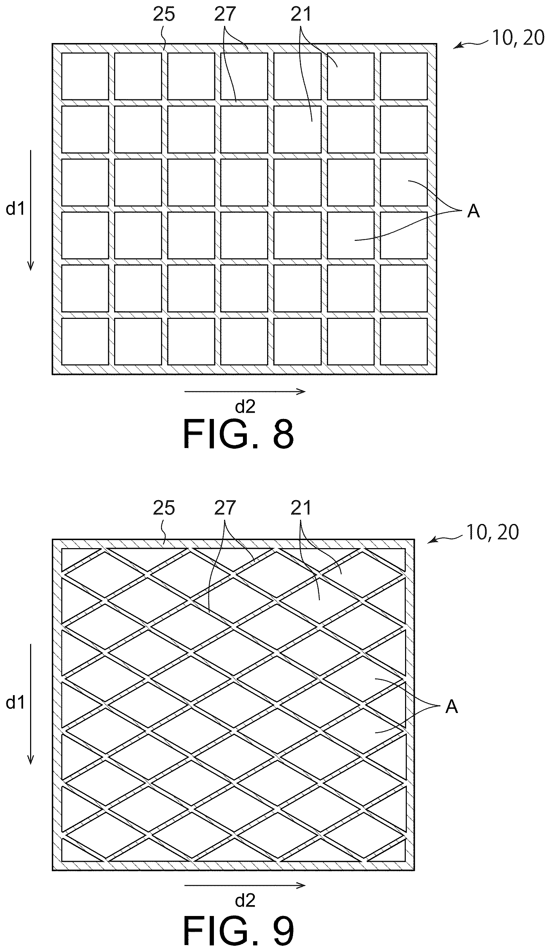

In the example illustrated in Fig. 8, each of square sections A are defined by four wall portions 27 or the seal member 25 and three wall portions 27. The wall portions 27 are regularly arranged in the first direction d1 and the second direction d2. The plurality of sections A are regularly arranged two-dimensionally in plan view of the light modulating member 20.

In the example illustrated in Fig. 9, each of rhombic sections A are defined by four wall portions 27. A length of each of the sections A extending in the second direction d2 is longer than a length of the section A extending in the first direction d1. The wall portions 27 are regularly arranged in two directions inclined with respect to the first direction d1. The plurality of sections A are regularly arranged two-dimensionally in plan view of the light modulating member 20.

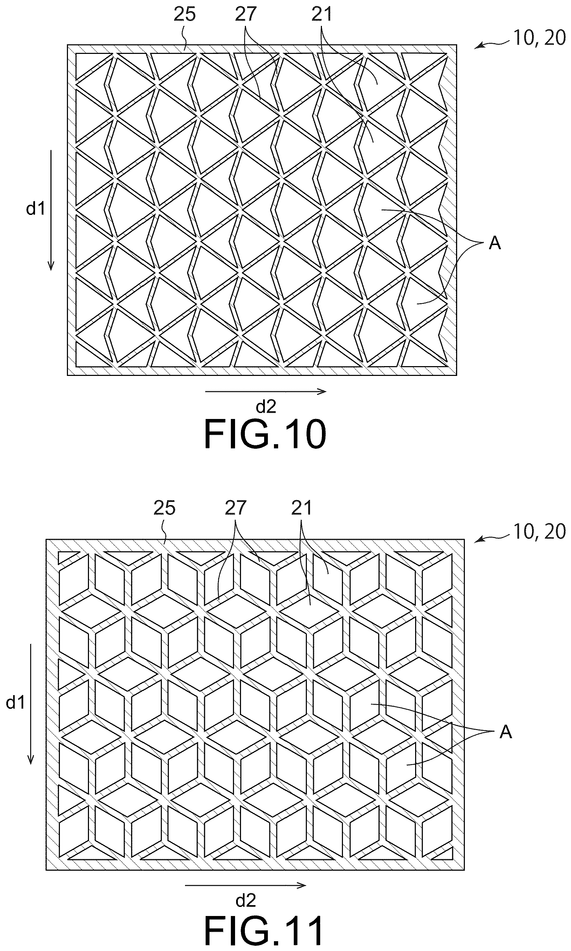

In the example illustrated in Fig. 10, each of two types of quadrangular sections A are defined by four wall portions 27. A rhombic shape is formed by combining the two types of sections A. Lengths over which two wall portions 27 extend among the four wall portions 27 that define each of the sections A are equal. Lengths over which the other two wall portions 27 that define each of the sections A extend are also equal. The wall portions 27 are regularly arranged in a plurality of directions inclined with respect to the first direction d1. The plurality of sections A are regularly arranged two-dimensionally in plan view of the light modulating member 20.

In the example illustrated in Fig. 11, each of rhombic sections A is defined by four wall portions 27. Each of the rhombic sections A have a shape formed by connecting two equilateral triangles along one of their sides. A regular hexagonal shape can be formed by three sections A and the wall portions 27 that form the sections A. The wall portions 27 are regularly arranged in a plurality of directions inclined with respect to the first direction d1. The plurality of sections A are regularly arranged two-dimensionally in plan view of the light modulating member 20.

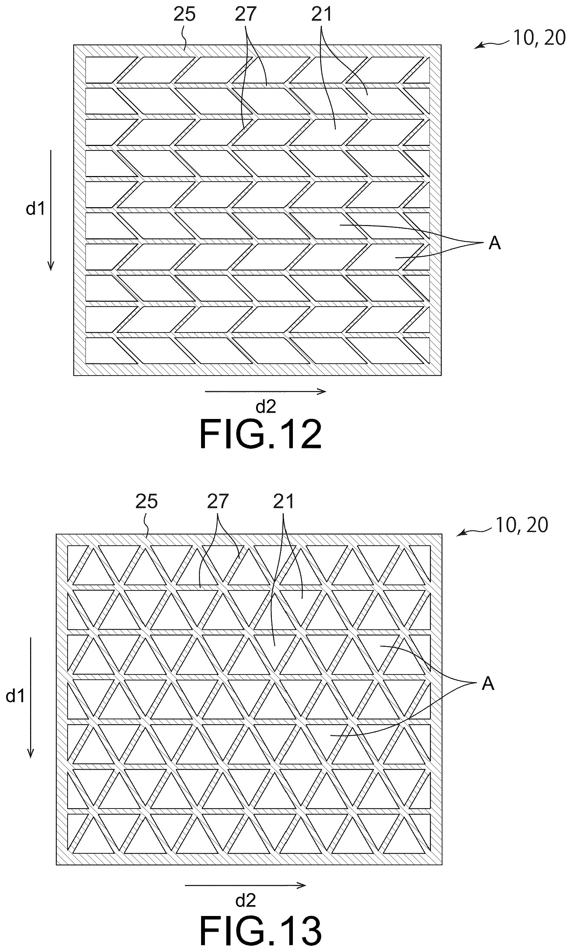

In the example illustrated in Fig. 12, each of parallelogram sections A is defined by four wall portions 27. A length of each of the sections A extending in the second direction d2 is longer than a length of the section A extending in the first direction d1. The wall portions 27 are regularly arranged in a direction inclined with respect to the first direction d1 and in the second direction d2. The plurality of sections A are regularly arranged two-dimensionally in plan view of the light modulating member 20.

In the example illustrated in Fig. 13, each of equilateral-triangular sections A is defined by three wall portions 27. The wall portions 27 are regularly arranged in the first direction d1 and in a direction inclined with respect to the first direction d1. The plurality of sections A are regularly arranged two-dimensionally in plan view of the light modulating member 20.

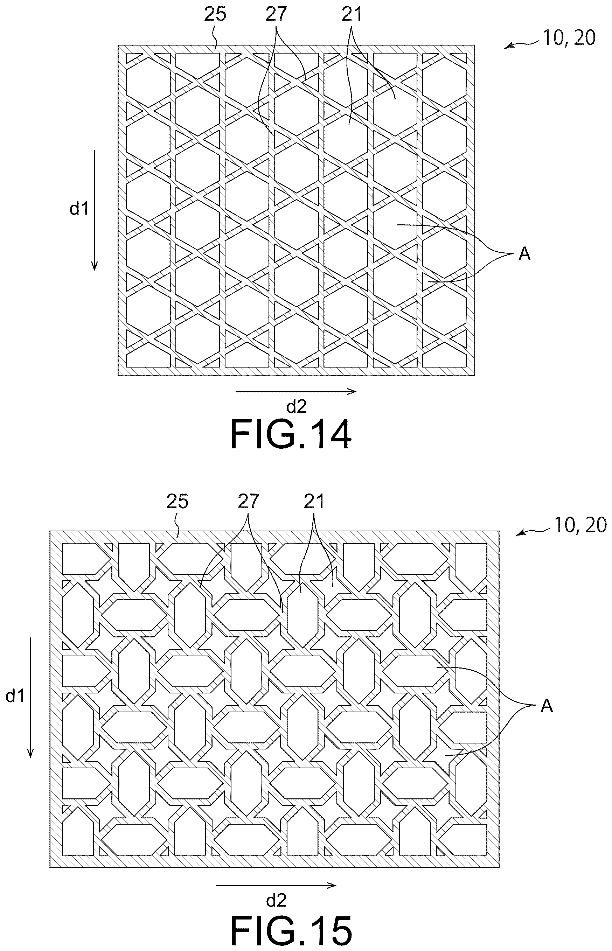

In the example illustrated in Fig. 14, each of regular hexagonal or equilateral-triangular sections A is defined by six or three wall portions 27. A Kagome (trihexagonal tiling) pattern is formed by the plurality of wall portions 27. The wall portions 27 are regularly arranged in the first direction d1 and in a plurality of directions inclined with respect to the first direction d1. The plurality of sections A are regularly arranged two-dimensionally in plan view of the light modulating member 20.

In the example illustrated in Fig. 15, each of hexagonal or octagonal sections A is defined by six or eight wall portions 27. Each of the hexagonal sections A is formed by connecting isosceles right triangles to opposite sides of a square so that each triangle's hypotenuse corresponds to a side of the square. Each of the octagonal sections A is formed by connecting isosceles right triangles to each side of a square so that each triangle's cathetus corresponds to a side of the square and each triangle's cathetus and hypotenuse face each other. A plane can be filled with the two types of sections A illustrated in Fig. 15. The wall portions 27 are regularly arranged in the first direction d1 and a plurality of directions inclined with respect to the first direction d1. The plurality of sections A are regularly arranged two-dimensionally in plan view of the light modulating member 20.

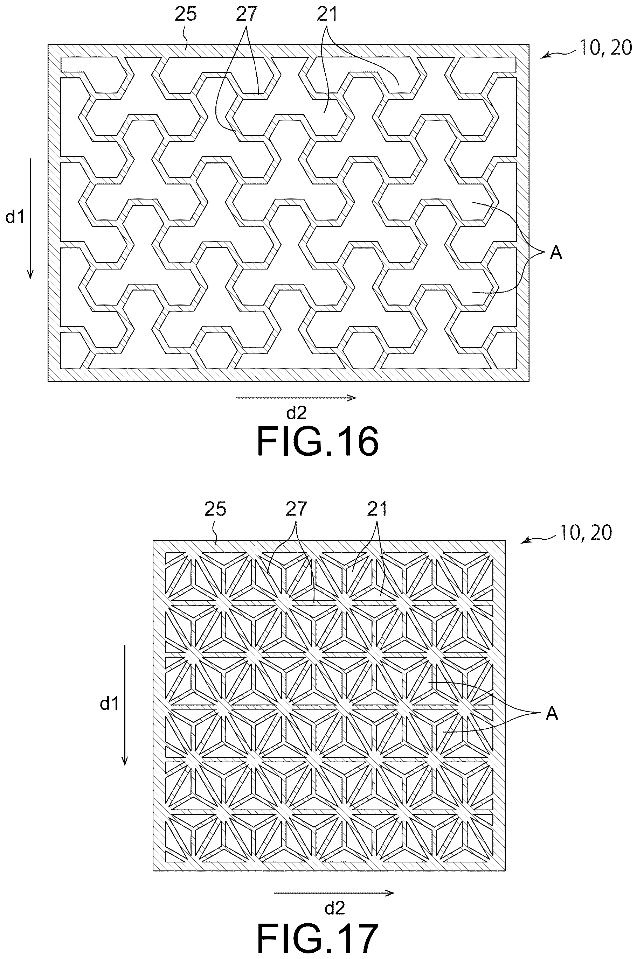

In the example illustrated in Fig. 16, each of triphenylene-like sections A obtained by connecting four regular hexagons so that three regular hexagons connected to one regular hexagon are not adjacent to each other is defined by eighteen wall portions 27. The wall portions 27 are arranged in a plurality of directions inclined with respect to the first direction d1. The sections A are regularly arranged two-dimensionally in the first direction d1 and the second direction d2.

In the example illustrated in Fig. 17, each of isosceles triangular sections A is defined by three wall portions 27. An Asanoha (hemp leaf) pattern is formed by the plurality of wall portions 27. The wall portions 27 are regularly arranged in the first direction d1 and in a plurality of directions inclined with respect to the first direction d1. The plurality of sections A are regularly arranged two-dimensionally in plan view of the light modulating member 20.

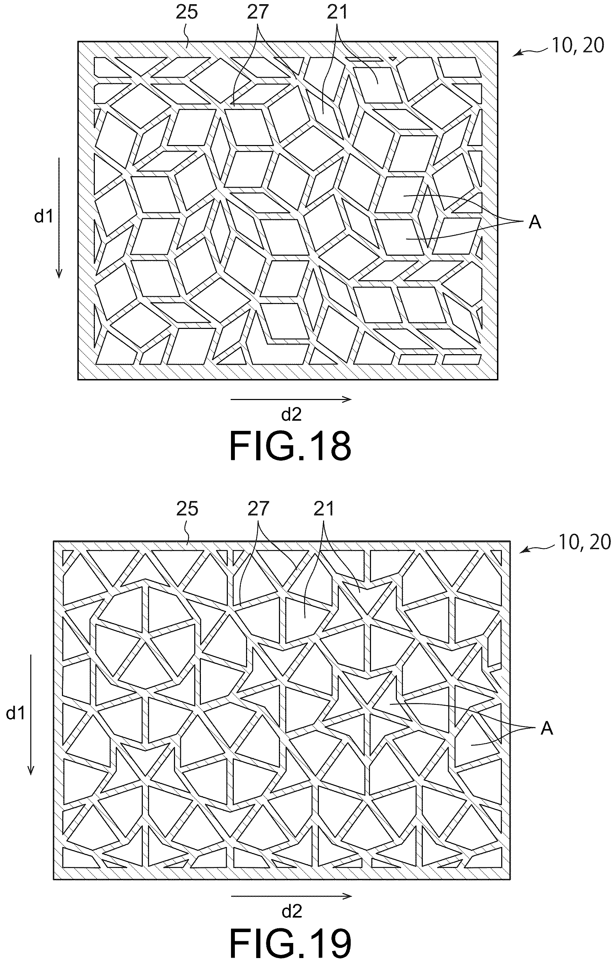

In the example illustrated in Fig. 18, each of two types of rhombic sections A is defined by four wall portions 27. A Penrose tiling pattern is formed by the plurality of wall portions 27. The wall portions 27 are irregularly arranged in a plurality of directions inclined with respect to the first direction d1. The plurality of sections A are irregularly arranged two-dimensionally in plan view of the light modulating member 20.

In the example illustrated in Fig. 19, each of two types of quadrangular sections A is defined by four wall portions 27. An angle formed by two wall portions 27 among the four wall portions 27 that define each of the sections A is 72°, and lengths over which these two wall portions 27 extend are equal. An angle formed by the other two wall portions 27 that define each of the sections A is 144° or 216°, and lengths over which these two wall portions 27 extend are also equal. A plane can be filled with the two types of sections A illustrated in Fig. 19. The wall portions 27 are regularly arranged in a plurality of directions inclined with respect to the first direction d1. The plurality of sections A are irregularly arranged two-dimensionally in plan view of the light modulating member 20.

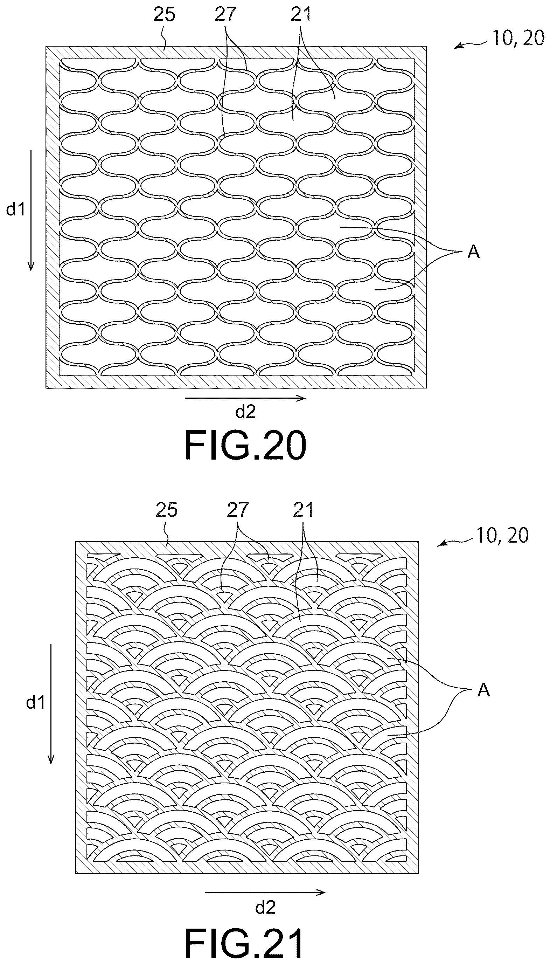

In the example illustrated in Fig. 20, each section A is defined by four wall portions 27. A netlike pattern is formed by the plurality of sections A. A length of each of the sections A extending in the second direction d2 is longer than a length of the section A extending in the first direction d1. Each of the wall portions 27 extends in a wave-like pattern. The wall portions 27 are regularly arranged. The plurality of sections A are regularly arranged two-dimensionally in plan view of the light modulating member 20.

In the example illustrated in Fig. 21, each of fan-shaped or partial annular sections A is defined by three or four wall portions 27. A Seigaiha (concentric wave) pattern is formed by the plurality of wall portions 27. A length of each of the sections A extending in the second direction d2 is longer than a length of the section A extending in the first direction d1. Each of the wall portions 27 extends in an arc shape. The wall portions 27 are regularly arranged. The plurality of sections A are regularly arranged two-dimensionally in plan view of the light modulating member 20.

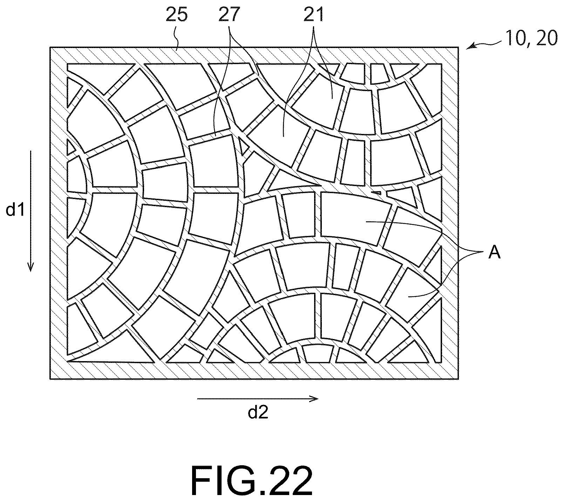

In the example illustrated in Fig. 22, each of partial annular sections A is defined by three or four wall portions 27. Each of the wall portions 27 extends in an arc shape. The wall portions 27 are regularly or irregularly arranged. The plurality of sections A are regularly or irregularly arranged two-dimensionally in plan view of the light modulating member 20.

An example of the method for manufacturing the light modulating member 20 and the laminated plate 10 is described. The method for manufacturing the light modulating member 20 includes a step of producing a first plate member and a second plate member, a step of applying a seal material to the second plate member, a step of forming a liquid crystal layer, a step of superimposing the first plate member and the second plate member to form a laminated body, and a step of cutting a part of the laminated body. The method for manufacturing the laminated plate 10 includes a step of joining the first substrate 11 and the second substrate 12 to the light modulating member 20.

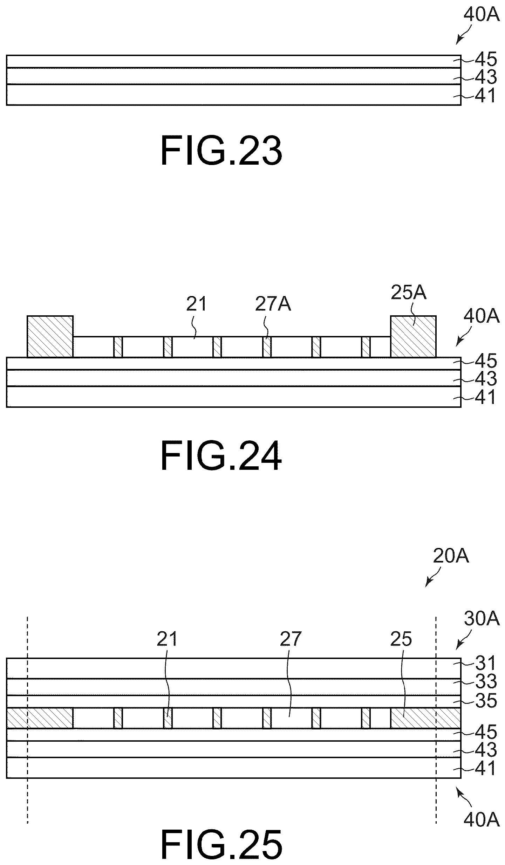

A first plate member 30A and a second plate member 40A are produced. The step of producing the second plate member 40A is described as an example. The second electrode 43 is formed on the second base member 41 by sputtering or the like. A composition that will form the second alignment film 45 is applied onto the second electrode 43. The composition is dried by volatilizing it in a drying furnace. The dried composition is solidified to form the second alignment film 45. An alignment regulating force may be imparted to the second alignment film 45 by rubbing, photo-alignment, or the like. Through the above steps, the second plate member 40A such as the one illustrated in Fig. 23 is produced. The first plate member 30A is produced by steps similar to the steps of producing the second plate member 40A.

A seal material 25A is printed in a surrounding pattern and a wall portion material 27A is printed in a desired pattern on one surface of the second plate member 40A. The seal material 25A and the wall portion material 27A are viscous liquid materials having adhesiveness or tackiness. The seal material 25A is cured to form the seal member 25. The wall portion material 27A is cured to form the wall portion 27. The seal material 25A and the wall portion material 27A are, for example, cured by being exposed to ultra violet light. As illustrated in Fig. 24, the liquid crystal layer 21 is formed by supplying a liquid crystal material containing liquid crystal molecules to sections on the second plate member 40A surrounded by the seal material 25A and the wall portion material 27A.

The first plate member 30A is laminated on a surface of the second plate member 40A to which the seal material 25A and the wall portion material 27A have been applied. When the first plate member 30A is laminated on the second plate member 40A, a pressing and smoothing operation may be performed by using a roller or the like. The seal material 25A is deformed and cured to become the seal member 25, and the wall portion material 27A is cured to become the wall portion 27. The first plate member 30A and the second plate member 40A are joined by the seal member 25 and the wall portion 27. Through the above steps, a laminated body 20A such as the one illustrated in Fig. 25 is produced.

A part of the first plate member 30A and a part of the second plate member 40A are cut along the dotted lines illustrated in Fig. 25. Peripheral portions of the first plate member 30A and the second plate member 40A are removed. The first plate member 30A and the second plate member 40A may be cut at least partially on the seal member 25. The first plate member 30A and the second plate member 40A may be cut by using a tool such as a punching blade or a cutter or by using a laser cutting device. Through the above steps, the light modulating member 20 is produced.

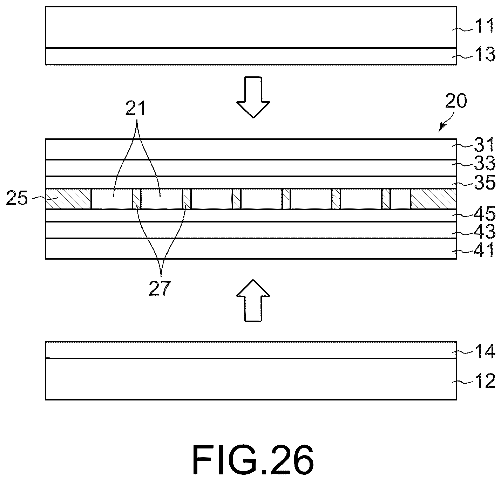

As illustrated in Fig. 26, the first joining layer 13 and the first substrate 11 are laminated on one surface of the light modulating member 20. The first substrate 11 and the light modulating member 20 are joined with the first joining layer 13 interposed therebetween. The second joining layer 14 and the second substrate 12 are laminated on the other surface of the light modulating member 20. The second substrate 12 and the light modulating member 20 are joined with the second joining layer 14 interposed therebetween. Through the above steps, the laminated plate 10 illustrated in Fig. 4 is produced.

In a conventional light modulating member, liquid crystal molecules in a liquid crystal layer are sometimes unevenly distributed. For example, in a case where the light modulating member is subjected to pressure or exposed to a high temperature in a manufacturing step or the like for a laminated plate including a light modulating member, a base member of the light modulating member is deformed by expansion caused by the pressure or heat. The liquid crystal layer is also deformed by being pressed by the base member. As a result, the liquid crystal molecules are unevenly distributed. Even if the pressure applied to the light modulating member is removed, the deformed liquid crystal layer does not completely return to its original form, and the liquid crystal molecules remain unevenly distributed. Alternatively, the light modulating member is sometimes placed obliquely with respect to the horizontal direction. The liquid crystal molecules in the liquid crystal layer shift downward in the vertical direction due to gravity. The portion where the liquid crystal molecules are concentrated appears darker than other portions. In a case where the liquid crystal molecules are unevenly distributed, outer appearance of the light modulating member is degraded.

In the light modulating member 20 according to the present embodiment, the liquid crystal layer 21 is divided into a plurality of sections A by the wall portions 27. The wall portions 27 that define the sections A suppress movement of the liquid crystal molecules beyond the wall portions 27. This suppresses movement of the liquid crystal molecules throughout the whole liquid crystal layer 21. Uneven distribution of the liquid crystal molecules in the liquid crystal layer 21 can be thus suppressed. Since the wall portions 27 define the sections A having any one of the desired shapes illustrated in Figs. 2 and 6 to 22 and other drawings, a good design can be imparted to the light modulating member 20.

A laminated plate including a conventional light modulating member having no wall portion and the laminated plate 10 including the light modulating member 20 according to the present embodiment were heated at 100°C for two hours in a state where the first direction d1 matches the vertical direction. Immediately after the heating, the laminated plates were observed. In the laminated plate including the conventional light modulating member having no wall portion, a dark discoloration was observed in a lower portion in the vertical direction. This was considered to be because the base member and the liquid crystal layer were deformed by thermal expansion and liquid crystal molecules contained in the liquid crystal layer moved due to gravity. In the laminated plate 10 including the light modulating member 20 according to the present embodiment, no discoloration was observed.

In plan view of the light modulating member 20, the area of the largest section among the sections A is equal to or less than 2500 mm². Since the sections A are not too large, uneven distribution of the liquid crystal molecules in each of the sections A is suppressed. In a case where the light modulating member 20 is placed obliquely with respect to the horizontal direction, it is possible to suppress movement of the liquid crystal molecules beyond the wall portions 27 caused by rupture of the wall portions 27 due to the weight of an excessive amount of liquid crystal molecules in each of the sections A. This can suppress uneven distribution of the liquid crystal molecules in the liquid crystal layer 21.

In plan view of the light modulating member 20, the area of the largest section among the sections A is equal to or more than 13 mm². Since the sections A are sufficiently large, the wall portions 27 are inconspicuous relative to the sections A, and the visible light transmittance of the light modulating member 20 can be appropriately adjusted by the liquid crystal layer 21 in the sections A.

In a case where the light modulating member 20 is placed obliquely with respect to the horizontal direction, in other words, in a case where the light modulating member 20 is placed so as to extend in the vertical direction, a value obtained by dividing the area [mm²] of the largest section among the sections A by the longest length L1 [mm] among the lengths of the largest section A in the horizontal direction is equal to or less than 50. A value obtained by dividing the area [mm²] of the largest section among the sections A by the longest length L1 [mm] among the lengths of the largest section A in the horizontal direction is considered to be almost identical to the length [mm] of the largest section A in the vertical direction. Since the value obtained by dividing the area [mm²] of the largest section among the sections A by the longest length L1 [mm] among the lengths of the largest section A in the horizontal direction is not too large, the amount of liquid crystal molecules that can move due to gravity is small. This suppresses uneven distribution of the liquid crystal molecules in each of the sections A. It is possible to suppress movement of liquid crystal molecules beyond the wall portions 27 caused by rupture of the wall portions 27 due to the weight of an excessive amount of liquid crystal molecules in the vertical direction in each of the sections A. This can suppress uneven distribution of the liquid crystal molecules in the liquid crystal layer 21.

The width W of the wall portions 27 is equal to or more than 10 µm and equal to or less than 1000 µm. Since the width W of the wall portions 27 is sufficiently large, movement of the liquid crystal molecules beyond the wall portions 27 caused by rupture of the wall portions 27 can be suppressed. Since the width W of the wall portions 27 is not too large, degradation of outer appearance of the light modulating member 20 due to observation of the wall portions 27 can be suppressed. In a case where the wall portions 27 are transparent, the visible light transmittance of the whole light modulating member 20 can be made low in a case where the visible light transmittance of the light modulating member 20 is adjusted to a low level since the width W of the wall portions 27 is not too large. In a case where the wall portions 27 are non-transparent, the visible light transmittance of the whole light modulating member 20 can be made high in a case where the visible light transmittance of the light modulating member 20 is adjusted to a high level since the width W of the wall portion 27 is not too large. It is possible to suppress interference by the wall portions 27 with the adjustment of the visible light transmittance of the light modulating member 20.

The length L2 of projection of a segment connecting centroids of two sections A divided by the same wall portion 27 in a direction orthogonal to a direction in which the wall portion 27 extends is equal to or more than 1 mm and equal to or less than 50 mm. The length L2 can be almost identical to an arrangement pitch of the wall portions 27 in plan view of the light modulating member 20. Since the length L2 is sufficiently long, it is possible to suppress degradation of the outer appearance of the light modulating member 20 caused by conspicuous visibility of the arrangement of wall portions 27. Since the length L2 is not too long, the area of each of the sections A can be set within an appropriate range.

The value obtained by dividing the area [mm²] of the largest section among the sections A by the average of the widths W [µm] of the wall portions 27 that define the largest section A is equal to or less than 250. The area of the largest section among the sections A is considered to be proportional to the mass of the liquid crystal molecules in the section A and further proportional to the pressure applied to the wall portions 27 by the liquid crystal molecules. The width W of the wall portions 27 is considered to be proportional to resistance to rupture of the wall portions 27. The value obtained by dividing the area [mm²] of the largest section among the sections A by the average of the widths W [µm] of the wall portions 27 that define the largest section A is considered as an index of resistance to rupture of the wall portions 27 caused by the liquid crystal molecules in each of the sections A. It is considered that the wall portions 27 are unlikely to be ruptured in a case where the value obtained by dividing the area [mm²] of the largest section among the sections A by the average of the widths W [µm] of the wall portions 27 that define the largest section A is equal to or less than 250. Movement of the liquid crystal molecules beyond the wall portions 27 can be thus suppressed. This can suppress uneven distribution of the liquid crystal molecules in the liquid crystal layer 21.

The value obtained by dividing the area [mm²] of the largest section among the sections A by the average of the widths W [µm] of the wall portions 27 that define that sections A is equal to or more than 0.05. Since the widths of the wall portions 27 relative to the areas of the sections A are not too large, conspicuous visibility of the wall portions 27 relative to the sections A is suppressed. The outer appearance of the light modulating member 20 can be thus kept good.

The light modulating member 20 according to the present embodiment can regulate the visible light transmittance. The light modulating member 20 includes the first laminated body 30, the second laminated body 40, the liquid crystal layer 21 located between the first laminated body 30 and the second laminated body 40, the seal member 25 that surrounds the liquid crystal layer 21, and the wall portion 27 that divides the liquid crystal layer 21 into the plurality of sections A in plan view of the light modulating member 20. The area of the largest section among the sections A is equal to or less than 2500 mm². Since the sections A are not too large, uneven distribution of the liquid crystal molecules in each of the sections A is suppressed. Movement of the liquid crystal molecules beyond the wall portions 27 can be suppressed. This can suppress uneven distribution of the liquid crystal molecules in the liquid crystal layer 21. Alternatively, the value obtained by dividing the area [mm²] of the largest section among the sections A by the longest length L1 [mm] among the lengths of the largest section A in the horizontal direction is equal to or less than 50. The amount of liquid crystal molecules that can move due to gravity is small. Uneven distribution of the liquid crystal molecules in each of the sections A is suppressed. Movement of liquid crystal molecules beyond the wall portions 27 caused by rupture of the wall portions 27 due to the weight of an excessive amount of liquid crystal molecules in the vertical direction in each of the sections A can be suppressed. This can suppress uneven distribution of the liquid crystal molecules in the liquid crystal layer 21.

The present embodiment can be changed in various ways.

In the above embodiment, the first substrate 11 and the second substrate 12 have a flat plate shape, and the laminated plate 10 and the light modulating member 20 have a flat plate shape accordingly. At least one of the first substrate 11 and the second substrate 12 may be curved. The light modulating member 20 has a shape corresponding to a gap formed between the first substrate 11 and the second substrate 12. The light modulating member 20 may also be curved.

In a case where the light modulating member 20 is curved, pressure differences occur depending on the position of the light modulating member 20 due to the shape. The liquid crystal molecules in the light modulating member 20 tend to be unevenly distributed due to the pressure differences. In a case where at least one of the first substrate 11 and the second substrate 12 is curved, the effect of suppressing uneven distribution of the liquid crystal molecules in the liquid crystal layer 21 produced by the light modulating member 20 according to the above embodiment is especially effective.

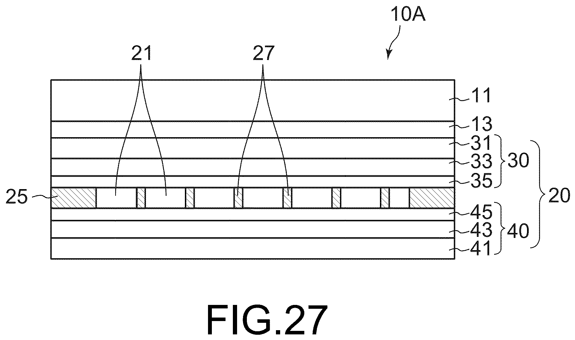

In the above embodiment, the light modulating member 20 is located between the first substrate 11 and the second substrate 12. In the laminated plate 10, the second substrate 12 may be omitted. The light modulating member 20 may be used as a substrate 10A with a light modulating member. As illustrated in Fig. 27, the substrate 10A with a light modulating member includes the first substrate 11 and the light modulating member 20. The light modulating member 20 is supported on the first substrate 11.

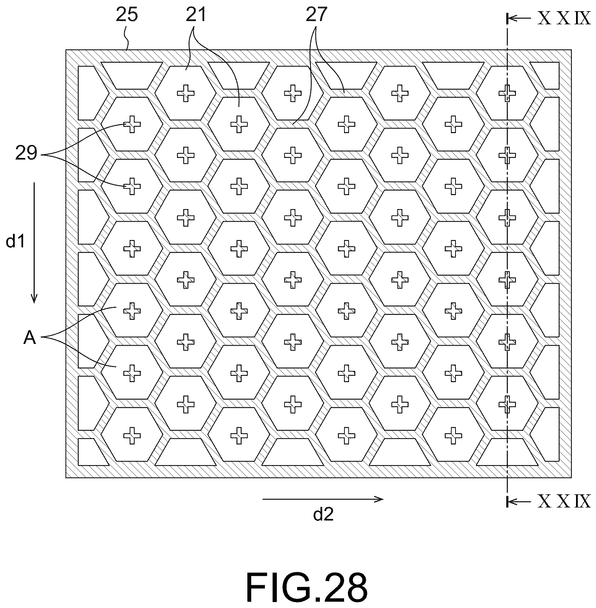

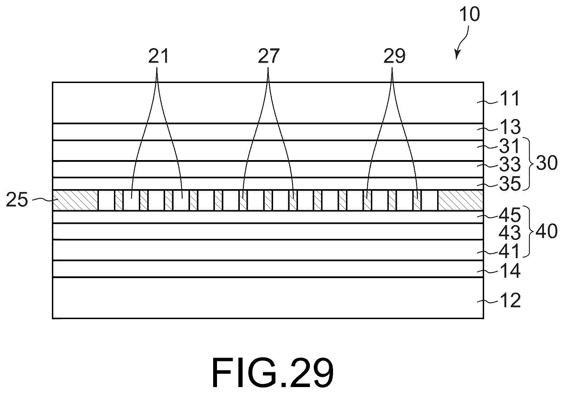

Fig. 28 is a plan view of the laminated plate 10 and the light modulating member 20 according to a modification of the present embodiment. Fig. 29 is a cross-sectional view taken along line XXIX-XXIX of Fig. 28. In the example illustrated in Figs. 28 and 29, the light modulating member 20 further includes a support portion 29 provided in each of the sections A. The support portion 29 is bonded to the first laminated body 30 and the second laminated body 40 to support the first laminated body 30 and the second laminated body 40. The first base member 31 and the second base member 41 are less likely to be deformed due to the support portion 29. Movement of the liquid crystal molecules caused by pressure can be suppressed. The support portion 29 suppresses movement of the liquid crystal molecules in each of the sections A. In a case where the light modulating member 20 is placed obliquely with respect to the horizontal direction, the support portion 29 preferably extends in the horizontal direction rather than the vertical direction to suppress movement of the liquid crystal molecules caused by gravity. In the example illustrated in Fig. 28, the support portions 29 are regularly arranged. In the example illustrated in Fig. 28, each of the support portions 29 has a cross shape. The support portions 29 may have any shape. A plurality of support portions 29 may be provided in each of the sections A. For example, a material of the support portions 29 may be a thermosetting resin such as epoxy resin, phenolic resin, polyurethane, or melamine resin, or may be an ultraviolet curable resin such as acrylic resin, urethane acrylate, epoxy acrylate, acrylate, polyester acrylate, amide-imide resin, polysiloxane, or vinyl ester resin, or may be a thermally and ultraviolet curable epoxy-acrylic resin. The support portions 29 may be independent from the wall portions 27 or may be integral with the wall portions 27 and extend from the wall portions 27.

Although the embodiment and the modifications have been described, the embodiment and the modifications do not limit the present disclosure. The above embodiment and modifications may be implemented in other forms, and various omissions, substitutions, changes, and additions may be made without departing from the gist of the present disclosure.

### EXAMPLES

The embodiment of the present disclosure is described in more detail by using Examples. The present disclosure is not limited to Examples.

Light modulating members that are different in at least one of an area S of a section and a longest length L1 of the section in the horizontal direction were prepared as Examples and Comparative Examples. Each of the light modulating members according to Examples and Comparative Examples includes a first laminated body, a second laminated body, a liquid crystal layer, a seal member, and a wall portion. In Examples 1 to 5 and Comparative Example 1, wall portions define regular hexagonal sections, as illustrated in Fig. 2 and other drawings. In Example 6 and Comparative Examples 2 and 3, wall portions define square sections, as illustrated in Fig. 8.

It was confirmed whether or not outer appearance changed immediately after the light modulating members according to Examples and Comparative Examples placed so as to extend in the vertical direction were exposed at 100°C for two hours. The light modulating members in which no deterioration in appearance was observed were rated as A, those in which deterioration was observed only to a slight extent were rated as B, and those in which noticeable deterioration was observed were rated as C. The light modulating members in which deterioration in appearance was observed only to a slight extent were further rated in order of increasing severity of deterioration as B1, B2, and B3.

Table 1 below show a result of confirmation of the area S of the section, the longest length L1 of the section in the horizontal direction, S/L1, and change in outer appearance in Examples and Comparative Examples.

**[Table 1]**

| | Area S of largest section [mm2] | Longest length L1 of section in horizontal direction [mm] | S/L1 | Change in outer appearance |
|---|---|---|---|---|
| Example 1 | 14 | 4.6 | 3 | A |
| Example 2 | 87 | 11.5 | 7.5 | A |
| Example 3 | 346 | 23.1 | 15 | B1 |
| Example 4 | 779 | 34.6 | 22.5 | B2 |
| Example 5 | 2165 | 57.7 | 37.5 | B3 |
| Example 6 | 2500 | 50 | 50 | B3 |
| Comparative Example 1 | 8660 | 115.5 | 75 | C |
| Comparative Example 2 | 5000 | 50 | 100 | C |
| Comparative Example 3 | 90000 | 300 | 300 | C |

The following is understood from Table 1.

In a case where the area of the largest section is equal to or less than 2500 mm², change in outer appearance is not confirmed. This is considered to be because the sections are not too large, the amount of liquid crystal molecules in each of the sections is small, and therefore uneven distribution of the liquid crystal molecules is inconspicuous even in a case where the liquid crystal molecules move in the section.

In a case where the value obtained by dividing the area [mm²] of the largest section among the sections by the longest length L1 [mm] among the lengths of the largest section in the horizontal direction is equal to or less than 50, change in outer appearance is not confirmed. This is considered to be because the amount of liquid crystal molecules that can move due to gravity is small, and therefore movement of liquid crystal molecules beyond the wall portions caused by rupture of the wall portions due to the weight of an excessive amount of liquid crystal molecules in the vertical direction in each of the sections is suppressed.

## Claims

1. A light modulating member that is capable of adjusting visible light transmittance, the light modulating member comprising:
a first laminated body including a first electrode and a first base member that supports the first electrode;
a second laminated body including a second electrode separated from the first electrode and a second base member that supports the second electrode;
a liquid crystal layer located between the first laminated body and the second laminated body;
a seal member that surrounds the liquid crystal layer; and
a wall portion that divides the liquid crystal layer into a plurality of sections in plan view of the light modulating member, wherein
an area of a largest section among the sections is equal to or less than 2500 mm².

2. A light modulating member that is capable of adjusting visible light transmittance and is placed so as to extend at least in a vertical direction, the light modulating member comprising:
a first laminated body including a first electrode and a first base member that supports the first electrode;
a second laminated body including a second electrode separated from the first electrode and a second base member that supports the second electrode;
a liquid crystal layer located between the first laminated body and the second laminated body;
a seal member that surrounds the liquid crystal layer; and
a wall portion that divides the liquid crystal layer into a plurality of sections in plan view of the light modulating member, wherein
a value obtained by dividing an area [mm²] of a largest section among the sections by a longest length [mm] among lengths of the largest section in a horizontal direction is equal to or less than 50.

3. The light modulating member according to claim 2, wherein
the area of the largest section among the sections is equal to or less than 2500 mm².

4. The light modulating member according to claim 1 or 3, wherein
the area of the largest section among the sections is equal to or more than 13 mm².

5. The light modulating member according to claim 1 or 2, wherein
a width of the wall portion is equal to or more than 10 µm and equal to or less than 1000 µm.

6. The light modulating member according to claim 1 or 2, wherein
a length of projection of a segment connecting centroids of two sections divided by a same wall portion in a direction orthogonal to a direction in which the wall portion extends is equal to or more than 1 mm and equal to or less than 50 mm.

7. The light modulating member according to claim 1 or 2, wherein
a value obtained by dividing the area [mm²] of the largest section among the sections by an average of widths [µm] of the wall portions that define the largest section is equal to or less than 250.

8. The light modulating member according to claim 1 or 2, further comprising a support portion provided in each of the sections.

9. A substrate with a light modulating member, comprising:
a first substrate; and
the light modulating member according to claim 1 or 2 supported on the first substrate.

10. A laminated plate comprising:
a first substrate and a second substrate that are opposed to each other; and
the light modulating member according to claim 1 or 2 located between the first substrate and the second substrate.

11. The laminated plate according to claim 10, wherein
at least one of the first substrate and the second substrate is curved.

12. The laminated plate according to claim 10, wherein
the first substrate and the second substrate have a flat plate shape.
